# EUROPÄISCHE PATENTANMELDUNG

(11) **EP 0 946 033 A2**
(43) Veröffentlichungstag der Anmeldung: **29.09.1999**
(21) Anmeldenummer: 99105965.0
(22) Anmeldetag: 24.03.1999
(51) Int. Cl.: H04M 3/00, H04Q 3/00

(54) **Anordnung zum Anschliessen einer Vielzahl von Teilnehmerleitungen an eine Telekommunikationseinrichtung**

(30) Priorität: 27.03.1998 DE 19813730
(71) Anmelder: SIEMENS AKTIENGESELLSCHAFT, 80333 München (DE)
(72) Erfinder: Zojer, Herbert, 9500 Villach (AT); Panis, Christian, 1230 Wien (AT); Krimmer, Roland, 82110 Germering (DE); Gazsi, Lajos, 40239 Düsseldorf (DE)

(57) **Zusammenfassung**

Die Erfindung betrifft eine Anordnung, in der eine Signalverarbeitungseinrichtung über eine bidirektionale Leitung mit einer Telekommunikationseinrichtung und über eine zweite bidirektionale Leitung mit einer Vielzahl von Vorverarbeitungseinrichtungen verbunden ist. Jede der Vielzahl von Vorverarbeitungseinrichtungen ist jeweils über eine bidirektionale Leitung mit einer Vielzahl von Teilnehmerleitungsschaltungen verbunden, wobei jede der Teilnehmerleitungsschaltungen ihrerseits mit genau einer Teilnehmerleitung verbunden ist. Eine zweite Ausführungsform umfaßt eine Zentraleinrichtung, die über eine bidirektionale Leitung mit einer Telekommunikationseinrichtung verbunden ist, und die über weitere bidirektionale Leitungen mit einer Vielzahl von TeilnehmerleitungsSchaltungen verbunden ist, wobei jeweils genau eine der Teilnehmerleitungsschaltungen mit genau einer Teilnehmerleitung verbunden ist.

## Beschreibung

Die Erfindung betrifft eine Anordnung nach dem Oberbegriff von Patentanspruch 1 und eine Anordnung nach dem Oberbegriff von Patentanspruch 10.

Bei dem Anschließen einer Vielzahl von Teilnehmerleitungen an Vermittlungsanlagen wird bisher pro Teilnehmerleitung eine Teilnehmerleitungsschaltung und eine Signalverarbeitungs- und steuerungseinrichtung, meistens in Form einer integrierten Schaltung, die programmierbare digitale Filter und Analog/Digital-, Digital-/Analog-Wandler (Codec) enthält, eingesetzt.

Die Teilnehmerleitungsschaltung SLIC (Subscriber line interface circuit) hat unter anderem die Aufgabe das analoge Hochspannungssignal der Teilnehmerleitung auf ein Niederspannungssignal zur weiteren Signalverarbeitung zu transformieren. Eine solche Teilnehmerleitungsschaltung ist beispielsweise in DE-A 196 39 885 beschrieben.

Die Signalverarbeitungs- und steuerungseinrichtung wandelt das Niederspannungssignal in ein digitales Signal und filtert dieses Signal mit seinen programmierbaren digitalen Filtern. Das so verarbeitete digitale Signal wird dann zur Weiterverarbeitung an die Vermittlungsanlage übergeben. In umgekehrter Richtung filtert und wandelt die Signalverarbeitungs- und steuerungseinrichtung ein von der Vermittlungsanalage ankommendes digitales Signal in ein analoges Niederspannungssignal. Neben der Filterung und Wandlung kann die Signalverarbeitungs- und steuerungseinrichtung an das Übertragungsverhalten der Teilnehmerleitung mittels Programmierung der Filterkoeffizienten des digitalen Filters angepaßt werden. Zu den weiteren Aufgaben gehört die Einstellung des optimalen Arbeitspunktes der Teilnehmerleitungsschaltung sowie Testfunktionen zum Testen der Teilnehmerleitungsschaltung und der Teilnehmerleitung.

Für den Anschluß einer Teilnehmerleitung sind damit zwei integrierte Schaltungen nötig. In der Siemens-Halbleiter-Produktübersicht 7/96 ist eine solche Anordnung dargestellt. Diese Lösung wird auf analogen Anschlußkarten (Analog Linecards) zur Verbindung des analogen Telefonnetz (POTS = Plain Old Telephone System) mit einer digitalen Telekommunikationseinrichtung verwendet.

Ein Nachteil dieser Lösung ist die hohe Anzahl an Bausteinen pro Anschlußkarte, die entsprechende Kosten pro Teilnehmerleitung zur Folge haben. Ein weiterer Nachteil ist der hohe Verdrahtungsaufwand einer solchen Anschlußkarte, der durch die hohe Anzahl an Bausteinen bedingt ist, und zu Problemen mit Übersprechen zwischen einzelnen Leitungen führt.

Das der Erfindung zugrundeliegende technische Problem besteht daher darin, daß die bisherige Lösung eine sehr große Anzahl an Bausteinen benötigt und einen damit verbundenen erhöhten Aufwand bezüglich Kosten und Aufbau einer Anschlußkarte bedingt sowie Probleme mit Übersprechen auftreten.

Dieses Problem wird durch eine Anordnung mit den Merkmalen von Patentanspruch 1 oder eine Anordnung mit den Merkmalen von Patentanspruch 10 gelöst. Vorteilhafte Ausgestaltungen dieser Anordnung ergeben sich aus den Unteransprüchen.

Eine Ausführungsform der Erfindung betrifft eine Anordnung, in der eine Signalverarbeitungseinrichtung über eine bidirektionale Leitung mit einer Telekommunikationseinrichtung und über eine zweite bidirektionale Leitung mit einer Vielzahl von Vorverarbeitungseinrichtungen verbunden ist. Jede der Vielzahl von Vorverarbeitungseinrichtungen ist jeweils über eine bidirektionale Leitung mit einer Vielzahl von Teilnehmerleitungsschaltungen verbunden, wobei jede der Teilnehmerleitungsschaltungen ihrerseits mit einer Teilnehmerleitung verbunden ist.

Der Vorteil dieser Erfindung besteht in der sich ergebenden baumartigen Struktur, in der die Signalverarbeitungseinrichtung die Wurzel, die Vorverarbeitungseinrichtungen die Äste und die Teilnehmerleitungsschaltungen die Zweige bilden. Durch die Konzentration der in bisherigen Lösungen verteilten digitalen Signalverarbeitung pro Teilnehmerleitung auf eine zentrale Signalverarbeitungseinrichtung verringert sich die Anzahl der Bausteine pro Teilnehmerleitung.

Weitere Vorteile, Merkmale und Anwendungsmöglichkeiten der Erfindung ergeben sich aus der nachfolgenden Beschreibung von Ausführungsbeispielen in Verbindung mit der Zeichnung. In der Zeichnung zeigen
Fig.1 ein Blockdiagramm eines ersten Ausführungsbeispiels der Anordnung nach der Erfindung,
Fig.2 ein Blockdiagramm eines Aufbaus einer bevorzugten Signalverarbeitungseinrichtung,
Fig.3 ein Blockdiagramm eines Aufbaus einer Vorverarbeitungseinrichtung und
Fig.4 ein Blockdiagramm einer zweiten Ausführungsform der Anordnung nach der Erfindung.

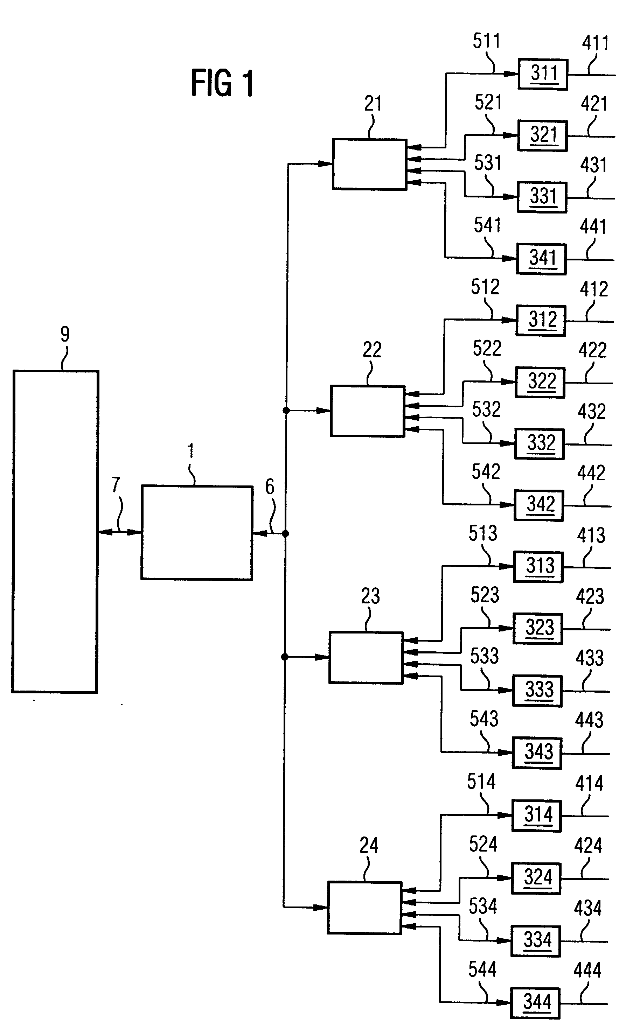

Gemäß Fig.1 ist eine Signalverarbeitungseinrichtung 1 über eine erste bidirektionale Leitung 7 mit einer Telekommunikationseinrichtung 9 verbunden. Über die Leitung 7 tauscht die Signalverarbeitungseinrichtung digitale Signale mit der Telekommunikationseinrichtung 9 aus, wobei die Signale beispielsweise PCM-kodierte (Puls-Code-Modulation) Sprachdaten und/oder Steuersignale sein können. Über eine zweite bidirektionale Leitung 6 sind Vorverarbeitungseinrichtungen 21, 22, 23 und 24 mit der Signalverarbeitungseinrichtung 1 verbunden. Für den Datenaustausch über die Leitung 6 sind jeder der Vorverarbeitungseinrichtungen eine Vielzahl von Zeitschlitzen zugewiesen, in denen Sprach- und Steuerdaten übertragen werden.

Die Vorverarbeitungseinrichtungen 21, 22, 23 und 24 wandeln die von der Signalverarbeitungseinrichtung 1 kommenden digitalen Sprach- oder Steuerdaten mit Sigma-Delta-Wandlern in analoge Signale. Sie steuern ferner daran angeschlossene Teilnehmerleitungsschaltungen 311, 321, 331, 341, ..., 314, 324, 334, 344 über die bidirektionalen Leitungen 511, 521, 531, 541, ..., 514, 524, 534, 544. In umgekehrter Richtung werden die von den Teilnehmerleitungsschaltungen 311, 321, 331, 341, ..., 314, 324, 334, 344 kommenden analogen Signale über die bidirektionalen Leitungen 511, 521, 531, 541, ..., 514, 524, 534, 544 an die Vorverarbeitungseinrichtungen 21, 22, 23 und 24 übertragen, in digitale Signale gewandelt und als kodierte Sprachdaten über die bidirektionale Leitung 6 an die Signalverarbeitungseinrichtung 1 gesendet. In der Signalverarbeitungseinrichtung 1 werden die von den Teilnehmerleitungen eingehenden und zu den Teilnehmerleitungen ausgehenden Signale einer digitalen Filterung unterzogen.

Die Funktion einer Teilnehmerleitungsschaltung besteht darin, von daran angeschlossenen Vorverarbeitungseinrichtungen kommende analoge Signale in Hochspannungssignale für die Übertragung auf die jeweiligen Teilnehmerleitungen 411, 421, 431, 441, ..., 414, 424, 434, 444 umzuwandeln und über die Teilnehmerleitungen 411, 421, 431, 441, ..., 414, 424, 434, 444 ankommende Signale entsprechend in Niederspannungssignale für die Weiterverarbeitung in den Vorverarbeitungseinrichtungen 21, 22, 23 und 24 umzuwandeln. Vorteilhaft wirkt sich bei dieser Lösung die Trennung von Signalverarbeitung und Vorverarbeitung aus, da die Signalverarbeitung zentralisiert von wenigen leistungsfähigen Signalprozessoren für eine Vielzahl von Teilnehmerleitungen durchgeführt werden kann. Aufgrund des Zeitschlitzverfahrens zur Übertragung von Daten über die Leitung 6 wird der Verdrahtungsaufwand gegenüber früheren Lösungen geringer. Bei einem bevorzugten Verfahren der Erfindung wird jeder der Vielzahl von Teilnehmerleitungen 411, 421, 431, 441, ..., 414, 424, 434, 444 ein bestimmtes Zeitintervall zugewiesen, in dem Daten zwischen der entsprechenden Vorverarbeitungseinrichtung 21, 22, 23 oder 24 und der Signalverarbeitungseinrichtung 1 vollduplex ausgetauscht werden.

In Senderichtung ergibt sich beispielsweise folgender Ablauf für eine Sprachübertragung: Sprachdaten in PCM-Format werden für eine Übertragung auf der Teilnehmerleitung 431 von der Telekommunikationseinrichtung 9 an die Signalverarbeitungseinrichtung 1 gesendet, dort digital gefiltert und dann dem Zeitschlitz, der der angesprochenen Teilnehmerleitung 431 entspricht, zugewiesen und an die entsprechende Vorverarbeitungseinrichtung 21 übertragen. Die angesprochene Vorverarbeitungseinrichtung 21 wandelt mit Sigma-Delta-Wandlung die digitalen Sprachsignale in analoge Sprachsignale und überträgt diese an die Teilnehmerleitungsschaltung 331. Die Teilnehmerleitungsschaltung 331 wandelt daraufhin die ankommenden analogen Sprachsignale in ein Hochspannungssignal zur Übertragung auf der Teilnehmerleitung 431.

In Empfangsrichtung empfängt beispielsweise die Teilnehmerleitungsschaltung 333 Sprachsignale über die Teilnehmerleitung 433 in Form eines analogen Hochspannungssignals, wandelt dieses in ein analoges Niederspannungssignal, das über die Leitung 533 an die Vorverarbeitungseinrichtung 23 gesendet wird. Dort wird das analoge Sprachsignal in ein digitales Sprachsignal gewandelt und in dem der Teilnehmerleitung 433 entsprechenden Zeitschlitz über die Leitung 6 an die Signalverarbeitungseinrichtung 1 übertragen. Die Signalverarbeitungseinrichtung 1 filtert das digitale Signal und überträgt das Signal im PCM-Format an die Telekommunikationseinrichtung 9.

Zur optimalen Anpassung der Teilnehmerleitungsschaltungen an die elektrischen Begebenheiten der Teilnehmerleitungen können Parameter der Teilnehmerleitungsschaltungen wie beispielsweise der Versorgungsstrom für die Teilnehmerleitung programmiert werden. Dazu werden Steuerdaten von der Signalverarbeitungseinrichtung 1 an die entsprechende Vorverarbeitungseinrichtung 21, 22, 23 oder 24 übertragen, die dann über die bidirektionalen Leitungen 511, 521, 531, 541, ..., 514, 524, 534, 544 die Teilnehmerleitungsschaltungen 311, 321, 331, 341, ..., 314, 324, 334, 344 einstellt. Die zur Einstellung erforderlichen Meßwerte werden von den Teilnehmerleitungsschaltungen 311, 321, 331, 341, ..., 314, 324, 334, 344 an die Vorverarbeitungseinrichtungen 21, 22, 23, und 24 übermittelt, um dann von den Vorverarbeitungseinrichtungen 21, 22, 23, 24 an die Signalverarbeitungseinrichtung 1 übertragen zu werden. Dort können dann die Meßdaten ausgewertet werden und auf Basis dieser Auswertung wiederum die TeilnehmerleitungsSChaltungen 311, 321, 331, 341, ..., 314, 324, 334, 344 neu an die Teilnehmerleitungen 411, 421, 431, 441, ..., 414, 424, 434, 444 anpaßt werden.

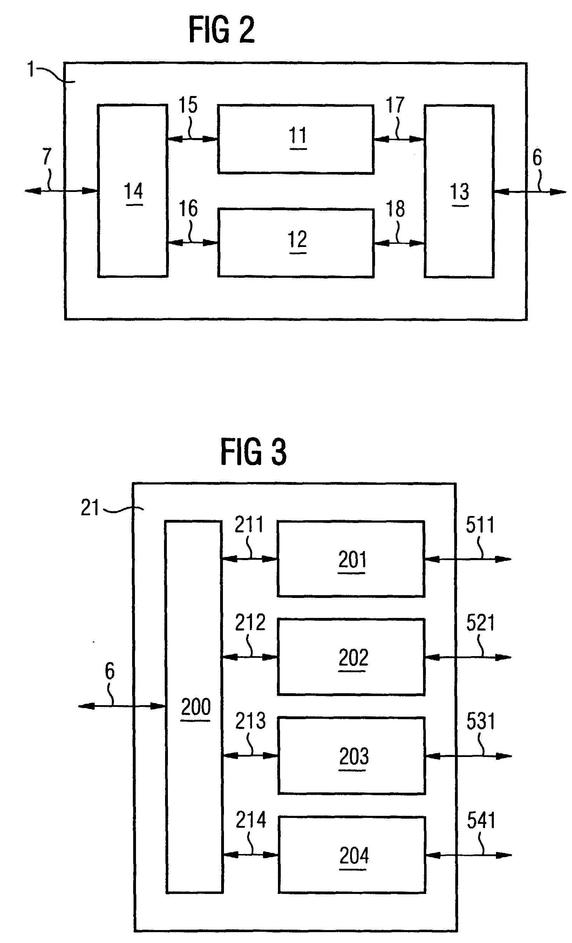

In Fig.2 ist der Aufbau der Signalverarbeitungseinrichtung 1 dargestellt, die einen Block 11 für die Verarbeitung der Sprachsignale und einen Block 12 zur Verarbeitung von Steuersignalen aufweist. In einer bevorzugten Ausführungsform umfaßt der Sprachverarbeitungsblock 11 sechs digitale Signalprozessoren und der Steuerblock 12 einen digitalen Signalprozessor. Zum Anschließen der bidirektionalen Leitung 7 dient ein Block 14, der den Datenaustausch mit der Telekommunikationseinrichtung 9 durchführt und Anschlußmöglichkeiten für PCM-Leitungen und Mikroprozessoren bietet. Ein Block 13 dient zum Anschließen der bidirektionalen Leitung 6 und überträgt die Signale für die entsprechenden Teilnehmerleitungen im Zeitschlitzverfahren. Dazu wird jeder Teilnehmerleitung ein Zeitschlitz zugeordnet, in dem Daten zwischen der entsprechenden Vorverarbeitungseinrichtung und der Signalverarbeitungseinrichtung übertragen werden. Über bidirektionale Leitungen 15 und 17 ist der Block 11 mit den Blöcken 14 und 13 verbunden. Block 12 ist über bidirektionalen Leitungen 16 und 18 mit Block 14 und 13 verbunden.

Fig.3 zeigt das Blockschaltbild einer Vorverarbeitungseinrichtung, die eine Anschlußeinheit 200 für die bidirektionale Leitung 6 zum Datenaustausch im Zeitschlitzverfahren mit der Signalverarbeitungseinrichtung 1 sowie Wandlereinheiten 201 bis 204 zur Analog-/Digital- und Digital-/Analogwandlung und Steuerung der angeschlossenen Teilnehmerleitungsschaltungen umfaßt. Die bidirektionalen Leitungen 511, 521, 531 und 541 übertragen analoge Signale von und zu den Teilnehmerleitungsschaltungen, während die bidirektionalen Leitungen 211, 212, 213 und 214 digitale Signale von den Wandlereinheiten 201, 202, 203 und 204 von und zur Anschlußeinheit 200 übertragen. Bevorzugt werden für die Analog-/Digital- und Digital/Analogwandlung 1-Bit-Sigma-Delta-Wandler verwendet.

In einer bevorzugten Ausführungsform 16 Teilnehmerleitungen in Form einer Anschlußkarte mit den in Fig.1 dargestellten Elementen zusammengefaßt und an die Telekommunikationseinrichtung angeschlossen. Die Karte enthält somit 16 Teilnehmerleitungsschaltungen, vier Vorverarbeitungseinrichtungen und eine Signalverarbeitungseinrichtung. Im Gegensatz zu 32 Bausteinen (16 Teilnehmerleitungsschaltungen und 16 Signalverarbeitungs- und steuerungseinrichtungen) bei der herkömmlichen Lösung, werden bei der erfindungsgemäßen Lösung lediglich 21 Bausteine benötigt. Durch die Ersparnis von 11 Bausteinen kann die Karte kompakter und preisgünstiger werden. Zudem wird der Verdrahtungsaufwand erheblich geringer, so daß ein Übersprechen zwischen einzelnen Leitungen verringert werden kann.

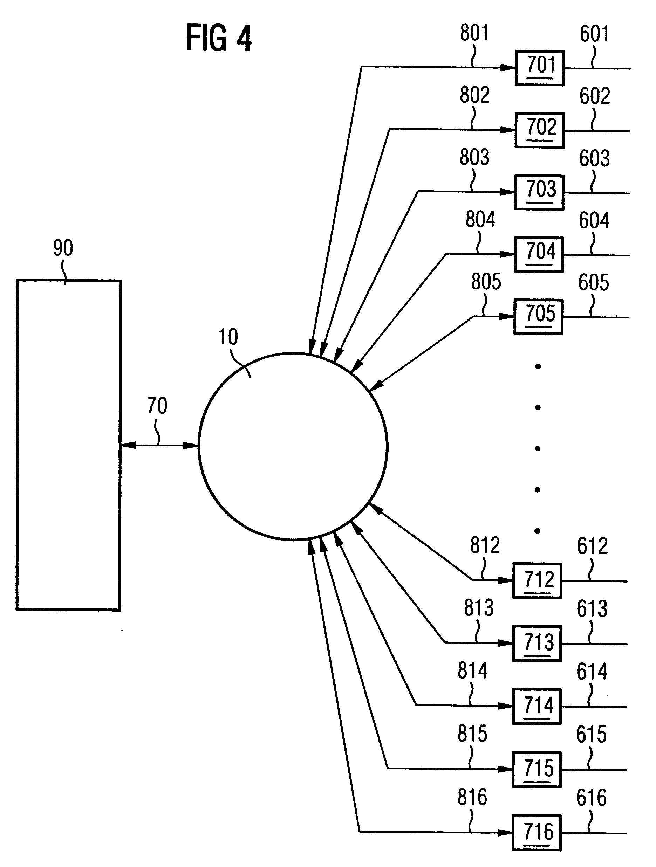

Die in Fig.4 dargestellte Anordnung ist ein zweites Ausführungsbeispiel der Erfindung. Eine Zentraleinrichtung 10 führt bei dieser Anordnung die gesamte digitale Signalverarbeitung durch und wandelt analoge Signale, die über bidirektionalen Leitungen 801, 802, 803, ..., 816 ankommen, in digitale Signale, filtert diese digital und kodiert die Signale in das PCM-Format zur Übertragung an eine Telekommunikationseinrichtung 90. Umgekehrt werden von der Telekommunikationseinrichtung 90 kommende digitale Signale gefiltert, in analoge Signale gewandelt und an Teilnehmerleitungsschaltungen 701, 702, 703, ..., 716, die mit Teilnehmerleitungen 601, 602, 603, ..., 616 verbunden sind, übertragen. Der Vorteil dieser Anordnung besteht in der Zusammenfassung der gesamten digitalen Signalverarbeitung und Vorverarbeitung in der Zentraleinrichtung 10, so daß sich ein noch geringerer Verdrahtungs- und Bauelementeaufwand für die analogen Anschlußkarten ergibt.

## Patentansprüche

1. Anordnung zum Anschließen einer Vielzahl von Teilnehmerleitungen (411, 421, 431, 441, ..., 414, 424, 434,444) an eine Telekommunikationseinrichtung (9) mit einer Vielzahl von Teilnehmerleitungsschaltungen (311, 321, 331, 341, ..., 314, 324, 334, 344), wobei jede der Teilnehmerleitungsschaltungen (311, 321, 331, 341, ..., 314, 324, 334, 344) mit genau einer der Vielzahl von Teilnehmerleitungen (411, 421, 431, 441, ..., 414, 424, 434, 444) verbunden ist,
**dadurch gekennzeichnet, daß**
a) die Anordnung eine Signalverarbeitungseinrichtung (1), die mit der Telekommunikationseinrichtung (9) über eine bidirektionale Leitung (7) verbunden ist, und eine Vielzahl von Vorverarbeitungseinrichtungen (21, 22, 23, 24) aufweist;
b) jede der Vorverarbeitungseinrichtungen (21, 22, 23, 24) über eine bidirektionale Leitung (6) mit der Signalverarbeitungseinrichtung (1) verbunden ist;
c) jede der Teilnehmerleitungsschaltungen (311, 321, 331, 341, ..., 314, 324, 334, 344) über jeweils eine bidirektionale Leitung (511, 521, 531, 541 , ..., 514, 524, 534, 544) mit genau einer der Vielzahl von Vorverarbeitungseinrichtungen (21, 22, 23, 24) verbunden ist.

2. Anordnung nach Anspruch 1,
**dadurch gekennzeichnet, daß**
die Signalverarbeitungseinrichtung (1) eine Steuereinrichtung (12) aufweist, die den jeweiligen Betriebszustand der Vielzahl von Vorverarbeitungseinrichtungen (21, 22, 23, 24) und Teilnehmerleitungsschaltungen (311, 321, 331, 341, ..., 314, 324, 334, 344) steuert;

3. Anordnung nach einem der vorhergehenden Ansprüche,
**dadurch gekennzeichnet, daß**
die Signalverarbeitungseinrichtung (1) eine Vielzahl von digitalen Signalprozessoren (11) umfaßt.

4. Anordnung nach einem der vorhergehenden Ansprüche,
**dadurch gekennzeichnet, daß**
die Signalverarbeitungseinrichtung (1) eine Anschlußeinheit (13) umfaßt, die digitale Signale von und zu den Vorverarbeitungseinrichtungen (21, 22, 23, 24) in einem Zeitschlitzverfahren, bei dem jeder der Vielzahl von Teilnehmerleitungen (411, 421, 431, 441, ..., 414, 424, 434, 444) ein Zeitschlitz zugeteilt ist, über die bidirektionale Leitung (6) überträgt.

5. Anordnung nach einem der vorhergehenden Ansprüche,
**dadurch gekennzeichnet, daß**
die Vorverarbeitungseinrichtung (21, 22, 23, 24) eine Anschlußeinheit (200) zum Anschließen der Signalverarbeitungseinrichtung (1) umfaßt, die in einem Zeitschlitzverfahren Daten mit der Signalverarbeitungseinrichtung (1) austauscht;

6. Anordnung nach einem der vorhergehenden Ansprüche,
**dadurch gekennzeichnet, daß**
die Vorverarbeitungseinrichtung (21, 22, 23, 24) eine Vielzahl von Wandlereinheiten (201, 202, 203, 204) umfaßt.

7. Anordnung nach Anspruch 6,
**dadurch gekennzeichnet, daß**
die Wandlereinheit (201, 202, 203, 204) Analog/Digital- und Digital-/Analog-Wandler umfaßt, die nach einem Sigma-Delta-Prinzip arbeiten.

8. Anordnung nach einem der vorhergehenden Ansprüche,
**dadurch gekennzeichnet, daß**
die Teilnehmerleitungsschaltung (311, 321, 331, 341, ..., 314, 324, 334, 344) eine Einrichtung zum Umsetzen der Signale der Teilnehmerleitung (411, 421, 431, 441, ..., 414, 424, 434, 444) in analoge Signale für die bidirektionale Leitung umfaßt.

9. Anordnung nach einem der vorhergehenden Ansprüche,
**dadurch gekennzeichnet, daß**
die Teilnehmerleitungsschaltung (311, 321, 331, 341, ..., 314, 324, 334, 344) eine Vielzahl von Messungen an der Teilnehmerleitung (411, 421, 431, 441, ..., 414, 424, 434, 444) durchführen kann.

10. Anordnung zum Anschließen einer Vielzahl von Teilnehmerleitungen (601, 602, 603, ..., 616) an eine Telekommunikationseinrichtung (90) mit einer Vielzahl von Teilnehmerleitungsschaltungen (701, 702, 703, ..., 716), wobei jede der Teilnehmerleitungen (601, 602, 603, ..., 616) mit jeweils genau einer der Vielzahl von Teilnehmerleitungsschaltungen (701, 702, 703, ..., 716) verbunden ist.
**dadurch gekennzeichnet, daß**
a) die Anordnung eine Zentraleinrichtung (10) aufweist;
b) jede der Teilnehmerleitungsschaltungen (701, 702, 703, ..., 716) mit der Zentraleinrichtung (10) über jeweils eine bidirektionale Leitung (801, 802, 803, ..., 816) verbunden ist;
c) die Zentraleinrichtung (10) über eine bidirektionale Leitung (70) mit der Telekommunikationseinrichtung (90) verbunden ist.

11. Anordnung nach Anspruch 10,
**dadurch gekennzeichnet, daß**
die Zentraleinrichtung (10) über die bidirektionalen Leitungen (801, 802, 803, ..., 816) von den Teilnehmerleitungsschaltungen (701, 702, 703, ..., 716) kommende analoge Signale in digitale Signale wandelt und digital weiterverarbeitet und an die Telekommunikationseinrichtung (9) weitergibt.

12. Anordnung nach Anspruch 10 oder 11,
**dadurch gekennzeichnet, daß**
die Zentraleinrichtung (10) von der Telekommunikationseinrichtung (9) über die bidirektionale Leitung (7) kommende digitale Signale verarbeitet und in analoge Signale wandelt, die über die bidirektionalen Leitungen (801, 802, 803, ..., 816) an die Teilnehmerleitungsschnittstellen (701, 702, 703, ..., 716) weitergegeben werden.
